# EUROPEAN PATENT SPECIFICATION

(11) **EP 2 519 416 B1**
(45) Date of publication and mention of the grant of the patent: **21.03.2018**
(21) Application number: 10840529.1
(22) Date of filing: 22.12.2010
(51) Int. Cl.: B60K 6/387, B60K 6/442, B60W 10/02, B60W 10/06, B60W 10/08, B60W 20/00

(54) **HYBRID POWER DRIVING SYSTEM AND DRIVING METHOD OF THE SAME**
HYBRIDANTRIEBSSYSTEM UND ANTRIEBSVERFAHREN DAMIT
SYSTÈME D'ENTRAÎNEMENT HYBRIDE ET SON PROCÉDÉ D'ENTRAÎNEMENT

(30) Priority: 31.12.2009 CN 200910238834
(43) Date of publication of application: 07.11.2012
(73) Proprietor: BYD Company Limited, Shenzhen, Guangdong 518118 (CN); Shenzhen BYD Auto R&D Company Limited, Shenzhen, Guangdong 518118 (CN)
(72) Inventor: ZHANG, Xinxin, Shenzhen, Guangdong 518118 (CN); ZHOU, Yinmei, Shenzhen, Guangdong 518118 (CN); LI, Song, Shenzhen, Guangdong 518118 (CN); LUO, Fei, Schenzhen, Guangdong 518118 (CN)
(74) Representative: Gulde & Partner
(86) International application number: PCT/CN2010/080135
(87) International publication number: WO 2011/079740

(56) References cited:
- EP-A1- 1 433 641
- CN-A- 101 011 931
- CN-A- 101 468 646
- CN-A- 101 468 646
- CN-A- 101 607 523
- CN-A- 101 607 523
- CN-Y- 201 296 159
- CN-Y- 201 296 159
- DE-A1- 2 649 806
- DE-A1- 19 838 853
- JP-A- 11 098 607
- JP-A- 11 098 607
- US-A1- 2006 089 232
- US-A1- 2007 193 793

## Description

The present invention relates to hybrid power vehicles, more particularly to a hybrid power driving system and a driving method of the same.

### BACKGROUND

Hybrid power vehicles have the power advantages of both the pure-electric vehicles and the traditional vehicles, and provide excellent energy savings, while also help to conserve the environment. Clutch system is an important part in the hybrid power vehicle. The clutch system directly relates to the efficiency and stability of power transmission in vehicle, especially in hybrid powered 4-wheel driving vehicle. The hybrid powered 4-wheel driving system provides an even more powerful power to the vehicle for meeting more power requirements of the vehicle than a power provided by the hybrid power dual wheel driving system. But a disadvantage of the hybrid powered 4-wheel driving system lies in controlling of the clutch. Especially, if the hybrid powered 4-wheel driving system has more than one clutch, the system may not realize accurate control of the clutch, so that power transmission of the driving system is not smooth. Not only will running efficiency and comfort of the vehicle be negatively affected but also lifespan of the clutches will be reduced.

CN 101 607 523 disclosed the features of the preamble of claim 1, more specifically a hybrid power outputting device used for outputting power to drive shafts, which comprises an engine with an output shaft, and a first electric generator arranged between the output shaft of the engine and an input shaft of a speed changing device. An output shaft of the speed changing device is connected with the drive shaft of a first pair of wheels. The device also comprises a second electric generator connected with the drive shaft of a second pair of wheels. A first clutch is arranged between the output shaft of the engine and the first electric generator.

Further state of the art is disclosed by DE 26 49 806 A1, EP 1 433 641 A1, CN 101 468 646 A, US 2006/089232 A1, and DE 198 38 853 A1.

### SUMMARY

In viewing thereof, the present invention is directed to solve at least one of the problems existing in the prior art. Accordingly, a hybrid power driving system is provided, which may overcome instability of power transmission in conventional art due to inaccurate control of clutches so that the clutches may be controlled in a precise way and the transmission efficiency and the stability thereof are enhanced. Further, a driving method for driving the hybrid power driving system is also provided, so that the driving system may be controlled in a precise and stable manner.

According to the invention, a hybrid power driving system is provided, comprising: an engine; a first motor; a first clutch operatively coupled between the engine and the first motor; a first reducing mechanism having a first input portion and a first output portion; a second clutch operatively coupled between the first motor and the first input portion of the first reducing mechanism; a first wheels group operatively coupled to the first output portion of the first reducing mechanism; a second motor; a second wheels group; a second reducing mechanism having a second input portion operatively coupled to the second motor, and a second output portion operatively coupled to the second wheels group; an energy storage device connected to the first motor and the second motor respectively. The hybrid power driving system is characterized by a clutch controller configured to engage or disengage the first clutch and/or the second clutch; an engine controller configured to start or stop the engine; and a motor controller connected with the clutch controller and the engine controller, configured to: start or stop the first motor and/or the second motor; and control the clutch controller and the engine controller according to a running mode of the hybrid power driving system, wherein the hybrid power driving system is adapted to: controlling the clutch controller by the motor controller to engage or disengage the first clutch and the second clutch respectively so that the hybrid power driving system is switchable between or among running modes of the hybrid power driving system, wherein during the disengaging of the second clutch, it is detected by the motor controller whether a sum power of the engine and the first motor is less than a preset value P, if YES, the clutch controller is controlled by the motor controller to disengage the second clutch, otherwise, if it is detected by the motor controller that the sum power of the engine and the first motor is greater than or equal to a preset value P, then whether the first motor has a rotational speed less than a second preset value r is detected by the motor controller, if YES, the clutch controller is controlled by the motor controller to disengage the second clutch; otherwise the rotational speed of the first motor is reduced by the motor controller until the rotational speed of the first motor is less than the second preset value r; so that the clutch controller is controlled by the motor controller to disengage the second clutch.

Further, according to the invention, a driving method of the hybrid power driving system as described hereinabove is provided, wherein the hybrid power driving system comprises: an engine; a first motor; a first clutch operatively coupled between the engine and the first motor; a first reducing mechanism having a first input portion and a first output portion; a second clutch operatively coupled between the first motor and the first input portion of the first reducing mechanism; a first wheels group operatively coupled to the first output portion of the first reducing mechanism; a second motor; a second wheels group; a second reducing mechanism having a second input portion operatively coupled to the second motor, and a second output portion operatively coupled to the second wheels group; an energy storage device connected to the first motor and the second motor respectively. The driving method is characterized by a clutch controller configured to engage or disengage the first clutch and/or the second clutch; an engine controller configured to start or stop the engine; and a motor controller connected with the clutch controller and the engine controller, configured to: start or stop the first motor and/or the second motor; and control the clutch controller and the engine controller according to a running mode of the hybrid power driving system; wherein the method comprises: controlling the clutch controller by the motor controller to engage or disengage the first clutch and the second clutch respectively so that the hybrid power driving system is switchable between or among running modes of the hybrid power driving system, wherein during the disengaging of the second clutch, it is detected by the motor controller whether a sum power of the engine and the first motor is less than a preset value P, if YES, the clutch controller is controlled by the motor controller to disengage the second clutch, otherwise, if it is detected by the motor controller that the sum power of the engine and the first motor is greater than or equal to a preset value P, then whether the first motor has a rotational speed less than a second preset value r is detected by the motor controller, if YES, the clutch controller is controlled by the motor controller to disengage the second clutch; otherwise the rotational speed of the first motor is reduced by the motor controller until the rotational speed of the first motor is less than the second preset value r; so that the clutch controller is controlled by the motor controller to disengage the second clutch.

With the driving system and the driving method as described hereinabove, the clutches are accurately controlled with enhanced efficiency with the aid of the motor controller and the clutch controller, thus the stability for power transmission in the whole system or method is also improved.

### BRIEF DESCRIPTION OF THE DRAWINGS

The aforementioned features and advantages of the invention as well as additional features and advantages thereof will be more clearly understood hereinafter as a result of a detailed description of embodiments when taken in conjunction with the drawings in which:
Fig.1 is a schematic block diagram of a hybrid power driving system according to the invention.
Fig.2 is a flow chart showing a second motor driven mode of a hybrid power driving system according to an embodiment of the invention.
Fig.3 is a flow chart showing a dual-motor driven mode of a hybrid power driving system according to an embodiment of the invention.
Fig.4 is a flow chart showing a serial mode of a hybrid power driving system according to an embodiment of the invention.
Fig.5 is a flow chart showing a parallel mode of a hybrid power driving system according to an embodiment of the invention.
Fig.6 is a flow chart when the first clutch is disengaged according to an embodiment of the invention.
Fig.7 is a flow chart when the first clutch is engaged according to an embodiment of the invention.
Fig.8 is a flow chart when the second clutch is disengaged according to the invention.
Fig.9 is a flow chart when the second clutch is engaged according to an embodiment of invention.

### DETAILED DESCRIPTION OF THE EMBODIMENTS

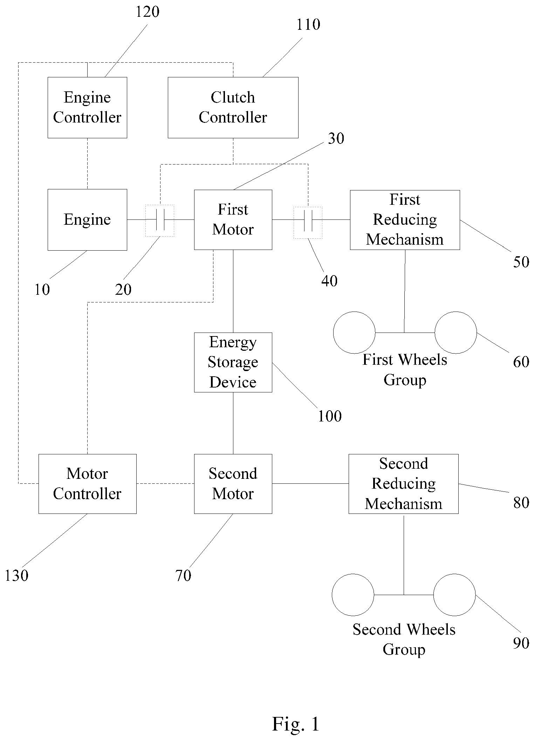

In the following a hybrid power driving system will be described in detail in conjunction with accompanying figures. As shown in Fig.1, the hybrid power driving system comprises an engine 10; a first motor 30; a first clutch 20 operatively coupled between the engine 10 and the first motor 30; a first reducing mechanism 50 having a first input portion (not shown) and a first output portion (not shown); a second clutch 40 operatively coupled between the first motor 30 and the first input portion of the first reducing mechanism 50; a first wheels group 60 operatively coupled to the first output portion of the first reducing mechanism 50; a second motor 70; a second wheels group 90; a second reducing mechanism 80 having: a second input portion operatively coupled to the second motor 70, and a second output portion operatively coupled to the second wheels group 90; an energy storage device 100 connected to the first motor 30 and the second motor 70 respectively; a clutch controller 110 configured to engage or disengage the first clutch 20 and/or the second clutch 40; an engine controller 120 configured to start or stop the engine 10; and a motor controller 130 connected with the clutch controller 110 and the engine controller 120, configured to: start or stop the first motor 30 and/or the second motor 70; and control the clutch controller 110 and the engine controller 120 according to a running mode of the hybrid power driving system. The engine 10 may be gasoline engine, diesel engine, or any other fuel engines, etc.

The first clutch 20 and the second clutch 40 may be clutches commonly known in the art.

The first motor 30 and the second motor 70 may be AC motors, switched reluctance motors, permanent magnet motors, etc. According to the electromagnetic induction principle, the first motor 30 and the second motor 70 can work in a generator mode or in a motor mode respectively. When running in the generator mode, the first and second motors transform mechanical energy into electricity energy. When running in the motor mode, the first and second motors transform the electricity energy into the mechanical energy. For example, when the power from the engine 10 is transferred to the first motor 30 via the engaged first clutch 20, the first motor 30 works in the generator mode, thus the first motor 30 transforms the mechanical energy into the electricity energy, and the electricity energy is transferred to and stored in the energy storage device 100 accordingly. While the driving system runs in the regenerative braking mode and the braking energy fed back from the first set of wheels and/or the second set of wheels is transmitted respectively to the first motor 30 and/or the second motor 70, the first motor 30 and/or the second motor 70 works in the generator mode, thus the mechanical energy is transferred into the electric power and is transmitted to and stored in the energy storage device 100. While the energy storage device 100 provides the electric power to the first motor 30 and the second motor 70, both the first motor 30 and the second motor 70 work in the motor mode, thus the electricity energy is transformed into mechanical energy to drive the wheels into running. The first reducing mechanism 50 and the second reducing mechanism 80 may be reducing gears, transmissions, differential mechanisms, planetary gears, etc. And commonly known by those skilled in the art, the power transferred from the first reducing mechanism 50 and the second reducing mechanism 80 may be separately transferred to the first wheels group 60 and the second wheels group 90 through a shaft coupling, or a wheel driving shaft, etc. to drive the vehicle into running.

According to an embodiment of the present disclosure, the energy storage device 100 may be rechargeable energy source, such as a storage battery pack, a fuel battery pack, etc. The energy storage device 100 may have an external charging interface coupled to the energy storage device 100 and configured to charge the energy storage device 100 from an external power source.

The drive system may has a plurality of modes including a second motor driven mode, a dual-motor driven mode, a serial mode and a parallel mode.

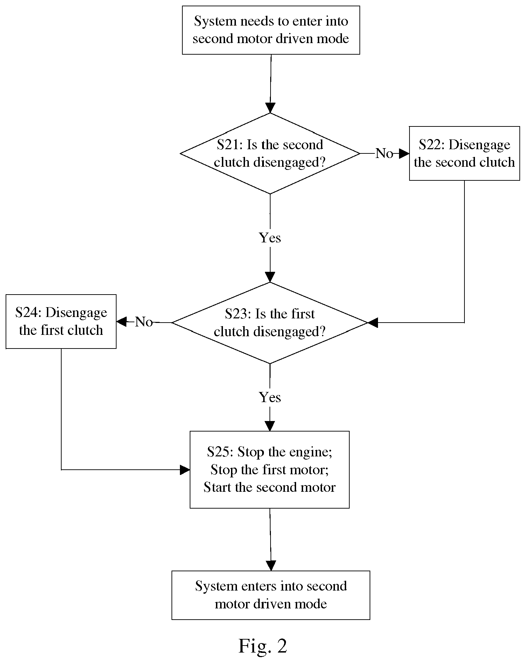

In the following, these modes will be described in detail in conjunction with Figs 2-5. If the required power of the driving system is less than the maximum output power of the second motor 70, for example during high traffic in the city, then the driving system generally works in the second motor driven mode. In this mode, the energy storage device 100 provides power to the second motor 70; the second motor 70 provides power to the second wheels 90 group via the second reducing mechanism 80; and the vehicle is driven by the second wheels group 90.

If the required power of the driving system is greater than the maximum output power of the second motor 70 but less than the sum of the maximum output power of the first motor 30 and the second motor 70, for example when loads of the driving system such as a vehicle are too heavy, the vehicle is in the climbing or the vehicle is in the overtaking, then the driving system generally works on the dual-motor driven mode. In this mode, the energy storage device 100 provides power to the first motor 30 and the second motor 70; the first motor 30 drives the first wheels group 60 via the first reducing mechanism 50; and the second motor 70 drives the second wheel group via the second reducing mechanism 80.

If the energy storage device 100 is out of energy and the required power of the driving system is less than the maximum output power of the second motor 70, then the driving system works on the serial mode. In this mode, the power of the engine 10 is transmitted to the first motor 30 via the first clutch 20; the first motor 30 transforms the power into electric energy which is transported to the energy storage device 100; the energy storage device 100 provides power to the second motor 70; and the second motor 70 drives the second wheel group via the second reducing mechanism 80.

If the required power of the driving system is greater than the maximum output power of the first motor 30 and the second motor 70, for example, loads of the driving system or vehicle are too heavy, such as the vehicle is in the climbing or the vehicle is in the overtaking, then the driving system works on the parallel mode. In this mode: the engine 10 drives the first wheels group 60 via the first clutch 20, the first motor 30, the second clutch 40 and the first reducing mechanism 50; the energy storage device 100 provides power to the second motor 70; and the second motor 70 drives the second wheel group via the second reducing mechanism 80.

In the following, a driving method of the hybrid power driving system as described hereinabove is also provided, which will be described in detail with reference to Figs. 2-5. The driving method may comprises: controlling clutch controller 110 by the motor controller 130 to engage or disengage the first clutch 20 and the second clutch 40 respectively so that the hybrid power driving system is switchable between or among running modes of the hybrid power driving system.

To be specific, the motor controller 130 can switch the hybrid power driving system to the second motor driven mode, the dual-motor driven mode, the serial mode and the parallel mode, and the details for the controlling will be described hereinafter.

As shown in Fig. 2, the hybrid power driving system is switched to the second motor driven mode by controlling the clutch controller 110 by the motor controller 130 to disengage the first clutch 20 and the second clutch 40 respectively (S21 and S22); powering the second motor 70 with the energy storage device 100 (S23); and driving the second wheels group 90 by the second motor 70 via the second reducing mechanism 80(S24).

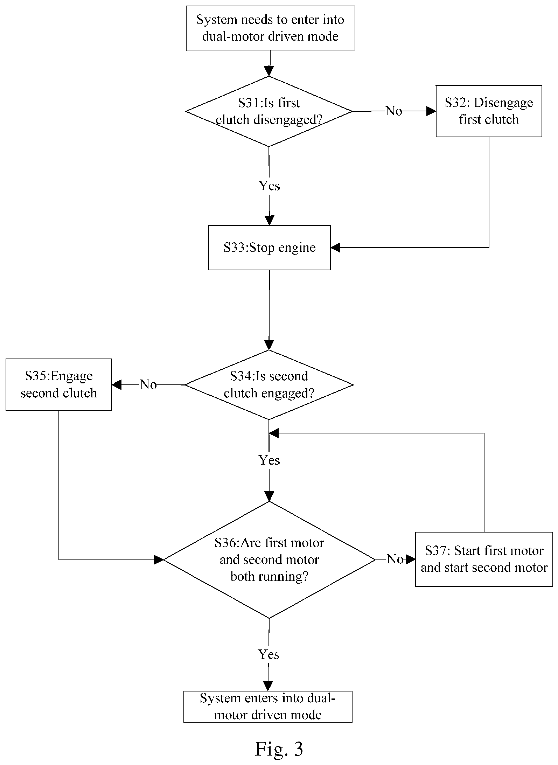

In the following the dual-motor driven mode will be described in detail referring to Fig. 3. The hybrid power driving system is switched to the dual-motor driven mode by: controlling the clutch controller 110 by the motor controller 130 to disengage the first clutch 20 and engage the second clutch 40 respectively; powering the first motor 30 and the second motor 70 by the energy storage device 100; and driving the first wheels group 60 and the second wheels group 90 via the first reducing mechanism 50 and the second reducing mechanism 80 respectively. Fig.3 is a flow chart showing a dual-motor driven mode of a hybrid power driving system according to an embodiment of the invention. As shown in Fig. 3, firstly, it is determined whether the first clutch 20 is disengaged or not (S31). If YES, the engine 10 is stopped (S33), otherwise the first clutch 20 is disengaged (S32) and step S33 is executed. Then it is determined whether the second clutch 40 is engaged or not (S34). If NOT, the second clutch 40 is engaged accordingly (S35), otherwise, it is determined whether the first motor 30 and the second motor 70 are both running (S36), if YES, the driving system enters into the dual-motor driven mode otherwise the first motor 30 and the second motor 70 are started separately (S37).

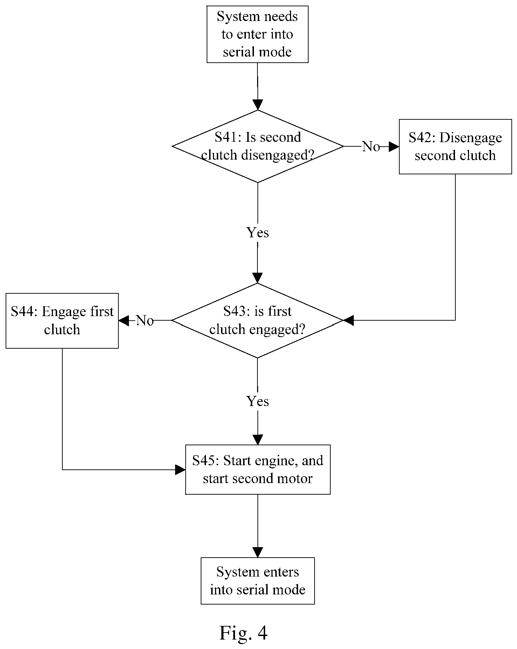

In the following the serial mode will be described in detail referring to Fig. 4. Fig.4 is a flow chart showing a serial mode of a hybrid power driving system according to an embodiment of the invention. According to an embodiment of the present invention, the hybrid power driving system is switched to the serial mode by: controlling the clutch controller 110 by the motor controller 130 to engage the first clutch 20 and disengage the second clutch 40 respectively; and controlling the engine controller 120 by the motor controller 130 to start the engine 10.. As shown in Fig. 4, firstly, it is determined whether the second clutch 40 is disengaged or not (S41). If NOT, the second clutch 40 is disengaged (S42). Then, it is determined whether the first clutch 20 is engaged or not (S43). If NOT, the first clutch 20 is engaged (S44). Otherwise, the engine 10 and the second motor 70 are started so that the driving system runs in a serial mode.

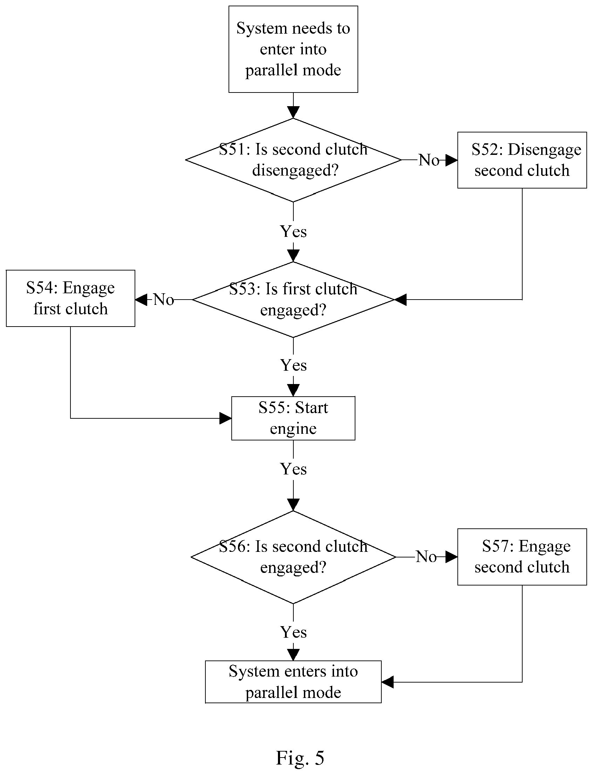

In the following the parallel mode will be described in detail referring to Fig. 5. Fig.5 is a flow chart showing the parallel mode of the hybrid power driving system according to an embodiment of the invention. According to an embodiment of the invention, the hybrid power driving system is switched to the parallel mode by: controlling the engine controller 120 by the motor controller 130 to start the engine 10; and controlling the clutch controller 110 by the motor controller 130 to engage the first clutch 20 and the second clutch 40 respectively. As shown in Fig. 5,firstly, the engine 10 is started by the engine controller 120 controlled by the motor controller 130 (S51). Then, it is determined whether the first clutch 20 is engaged or not (S52), if NOT, the first clutch 20 is engaged by the clutch controller 110 (S53), if YES, it is determined whether the second clutch 40 is engaged or not (S54). After the first and second clutches 20, 40 have been engaged, the driving system runs in the parallel mode.

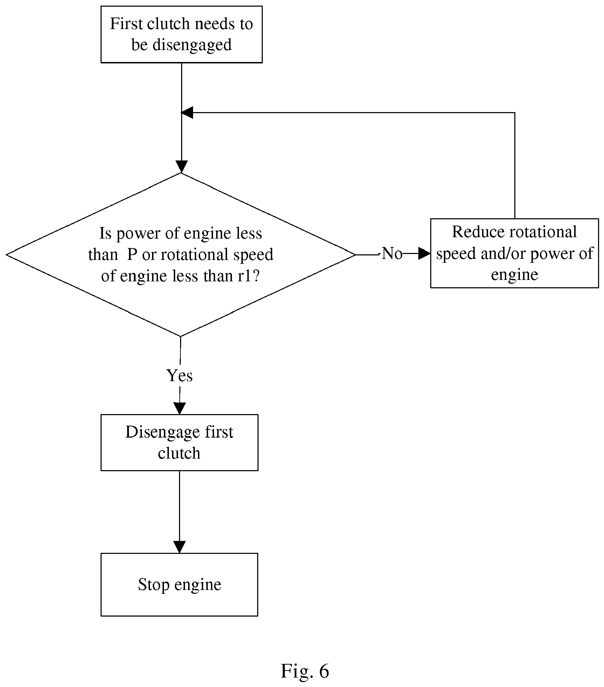

Fig.6 is a flow chart when the first clutch is disengaged according to an embodiment of invention. As shown in Fig. 6, if the first clutch 20 needs to be disengaged, then the motor controller 130 detects the power of the engine 10 and the rotational speed of the engine 10. If the motor controller 130 detects that the power of the engine 10 is less than a preset value P or the rotational speed of the engine 10 is less than a preset value r; then the motor controller 130 controls the clutch controller 110 to disengage the first clutch 20. If the motor controller 130 detects that the power of the engine 10 is greater than or equal to a preset value P and the rotational speed of the engine 10 is greater than or equal to a preset value r; then the motor controller 130 controls the engine controller 120 to reduce the rotational speed and/or the power of the engine 10 until the power of the engine 10 is less than the preset value P or the rotational speed of the engine 10 is less than the preset value r; and then the motor controller 130 controls the clutch controller 110 to disengage the first clutch 20.

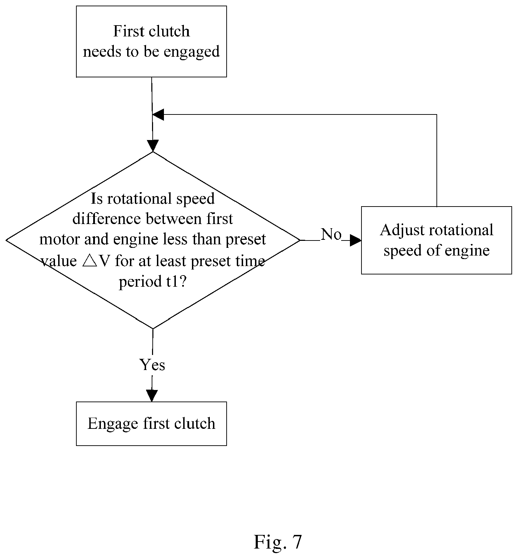

Fig.7 is a flow chart when the first clutch is engaged according to an embodiment of the invention. As shown in Fig. 7, if the first clutch 20 needs to be engaged, the motor controller 130 detects the speed of the engine 10 and the speed of the motor. If the motor controller 130 detects that the rotational speed difference between the first motor 30 and the engine 10 is less than a preset value ΔV for at least a preset time period t1; then the motor controller 130 controls the clutch controller 110 to engage the first clutch 20. If the motor controller 130 detects that the rotational speed difference between the first motor 30 and the engine 10 is greater than or equal to a preset value ΔV, or the rotational speed difference is less than the preset value ΔV for less than a preset time period t1; then the motor controller 130 controls the clutch controller 110 to adjust the rotational speed of the engine 10 until the rotational speed difference of the first motor 30 and the engine 10 is less than the preset value Δ V for more than the preset time period t1; and then the motor controller 130 controls the clutch controller 110 to engage the first clutch 20.

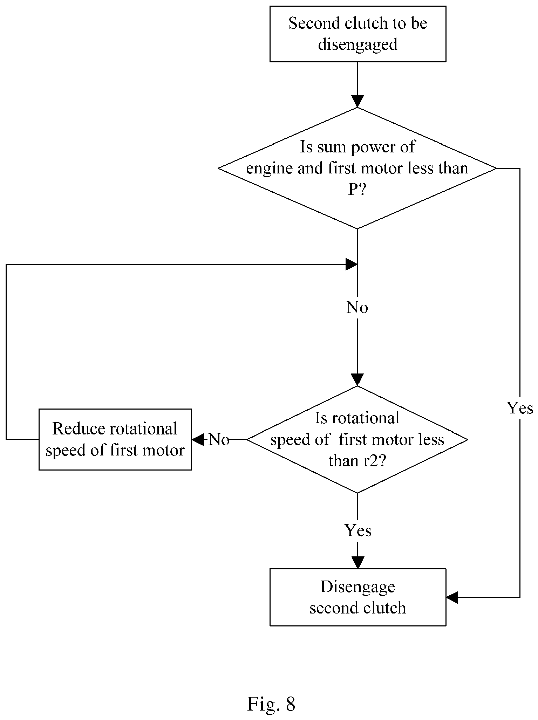

Fig.8 is a flow chart when the second clutch is disengaged according to the invention. As shown in Fig. 8, if the second clutch 40 need to be disengaged, then the motor controller 130 detects the power of the engine 10 and the power of the first motor 30. If the motor controller 130 detects that the sum power of the engine 10 and the first motor 30 is less than a preset value P; then the motor controller 130 controls the clutch controller 110 to disengage the second clutch 40. If the motor controller 130 detects that the sum power of the engine 10 and the first motor 30 is greater than or equal to a preset value P and the rotational speed of the engine 10 is less than a preset value r, the motor controller 130 controls the clutch controller 110 to disengage the second clutch 40. If the motor controller 130 detects that the sum power of the engine 10 and the first motor 30 is greater than or equal to a preset value P; and the rotational speed of the engine 10 is greater than or equal to a preset value r; then the motor controller 130 reduces the rotational speed of the first motor 30 until the rotational speed of the first motor 30 is less than r; and then the motor controller 130 controls the clutch controller 110 to disengage the second clutch 40.

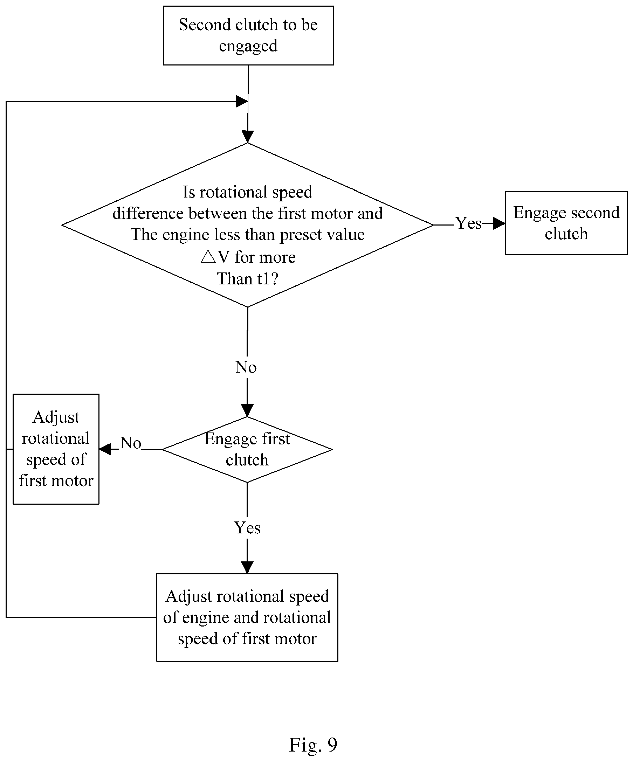

Fig.9 is a flow chart when the second clutch is engaged according to an embodiment of the invention. As shown in Fig. 9, if the second clutch 40 need to be engaged, then the motor controller 130 detects the speed of the engine 10 and the speed of the motor. If the motor controller 130 detects that the rotational speed difference between the first motor 30 and the engine 10 is less than a preset value ΔV and for more than a preset time period t1; then the motor controller 130 controls the clutch controller 110 to engage the second clutch 40. If the motor controller 130 detects that: the rotational speed difference between the first motor 30 and the engine 10 is greater than or equal to the preset value ΔV, or the rotational speed difference is less than the preset value ΔV for less than a preset time period t1; and the first clutch 20 is engaged; then the motor controller 130 adjusts the rotational speed of the engine 10 and the rotational speed of the first motor 30 until the rotational speed difference between the first motor 30 and the present driving is less than the preset value ΔV for more than the preset time period t1; and then the motor controller 130 controls the clutch controller 110 to engage the second clutch 40. If the motor controller 130 detects that: the rotational speed difference between the first motor 30 and the engine 10 is greater than or equal to the preset value ΔV, or the rotational speed difference is less than the preset value ΔV for less than a preset time period t1; and the first clutch 20 is disengaged; then the motor controller 130 adjusts the rotational speed of the first motor 30 until the rotational speed difference between the first motor 30 and the present driving is less than the preset value ΔV for more than the preset time period t1; and then the motor controller 130 controls the clutch controller 110 to engage the second clutch 40.

In the above driving method, the preset value P is about 4KW to about 6KW, more particularly, the preferred value thereof is 5KW. The preset value r is about 800 r/min to about 1200r/min, more particularly, the preferred value is 1000r/min. The preset value ΔV is about 100 r/min to about 250 r/min, more particularly, the preferred value is 160 r/min. And the preset time period t1 is about 0.4s to about 0.6s, more particularly the preferred value is 0.5s.

With the driving system and the driving method as described hereinabove, the clutches are accurately controlled with enhanced efficiency with the aid of the motor controller and the clutch controller, thus the stability for power transmission in the whole system or method is also improved.

## Claims

1. A hybrid power driving system comprising:
an engine (10);
a first motor (30);
a first clutch (20) operatively coupled between the engine (10) and the first motor (30);
a first reducing mechanism (50) having a first input portion and a first output portion;
a second clutch (40) operatively coupled between the first motor (30) and the first input portion of the first reducing mechanism (50);
a first wheels group (60) operatively coupled to the first output portion of the first reducing mechanism (50);
a second motor (70);
a second wheels group (90);
a second reducing mechanism (80) having a second input portion operatively coupled to the second motor (70), and a second output portion operatively coupled to the second wheels group (90);
an energy storage device (100) connected to the first motor (30) and the second motor (70) respectively;
**characterized by**
a clutch controller (110) configured to engage or disengage the first clutch (20) and/or the second clutch (40);
an engine controller (120) configured to start or stop the engine (10); and
a motor controller (130) connected with the clutch controller (110) and the engine controller (120), configured to:
a) start or stop the first motor (30) and/or the second motor (70); and
b) control the clutch controller (110) and the engine controller (120) according to a running mode of the hybrid power driving system, wherein the hybrid power driving system is adapted to:
controlling the clutch controller (110) by the motor controller (130) to engage or disengage the first clutch (20) and the second clutch (40) respectively so that the hybrid power driving system is switchable between or among running modes of the hybrid power driving system, wherein
during the disengaging of the second clutch (40), it is detected by the motor controller (130) whether a sum power of the engine (10) and the first motor (30) is less than a preset value P, if YES, the clutch controller (110) is controlled by the motor controller (130) to disengage the second clutch (40), otherwise,
if it is detected by the motor controller (130) that the sum power of the engine (10) and the first motor (30) is greater than or equal to a preset value P, then whether the first motor (30) has a rotational speed less than a second preset value r is detected by the motor controller (130), if YES, the clutch controller (110) is controlled by the motor controller (130) to disengage the second clutch (40); otherwise
the rotational speed of the first motor (30) is reduced by the motor controller (130) until the rotational speed of the first motor (30) is less than the second preset value r; so that the clutch controller (110) is controlled by the motor controller (130) to disengage the second clutch (40).

2. The hybrid power driving system of claim 1, further comprising an external charging interface coupled to the energy storage device (100) and configured to charge the energy storage device (100) from an external power source.

3. The hybrid power driving system of claim 1, wherein the running mode of the hybrid power driving system comprises a second motor driven mode in which
the first clutch (20) and the second clutch (40) are disengaged;
the second motor (70) is powered by the energy storage device (100); and
the second wheels group (90) is driven by the second motor (70) via the second reducing mechanism (80).

4. The hybrid power driving system of claim 3, wherein the running mode of the hybrid power driving system further comprises one selected from a dual-motor driven mode, a serial mode and a parallel mode, wherein in the dual-motor driven mode:
the first clutch (20) is disengaged and the second clutch (40) is engaged;
the first motor (30) and the second motor (70) are powered by the energy storage device (100);
the first wheels group (60) is driven by the first motor (30) via the first reducing mechanism (50); and
the second wheels group (90) is driven by the second motor (70) via the second reducing mechanism (80);
wherein in the serial mode:
the first clutch (20) is engaged and the second clutch (40) is disengaged;
the power of the engine (10) is transmitted to the first motor (30) via the first clutch (20);
the first motor (30) transforms the power into electric energy which is stored to the energy storage device (100);
the second motor (70) is powered by the energy storage device (100); and
the second wheels group (90) is driven by the second motor (70) via the second reducing mechanism (80); and
wherein in the parallel mode:
the first clutch (20) and the second clutch (40) are engaged respectively;
the first wheels group (60) is driven by the engine (10) via the first clutch (20), the first motor (30), the second clutch (40) and the first reducing mechanism (50);
the second motor (70) is powered by the energy storage device (100); and
the second wheels group (90) is driven by the second motor (70) via the second reducing mechanism (80).

5. A driving method for driving the hybrid power driving system,
wherein the hybrid power driving system comprises:
an engine (10);
a first motor (30);
a first clutch (20) operatively coupled between the engine (10) and the first motor (30);
a first reducing mechanism (50) having a first input portion and a first output portion;
a second clutch (40) operatively coupled between the first motor (30) and the first input portion of the first reducing mechanism (50);
a first wheels group (60) operatively coupled to the first output portion of the first reducing mechanism (50);
a second motor (70);
a second wheels group (90);
a second reducing mechanism (80) having a second input portion operatively coupled to the second motor (70), and a second output portion operatively coupled to the second wheels group (90);
an energy storage device (100) connected to the first motor (30) and the second motor (70) respectively;
**characterized by**
a clutch controller (110) configured to engage or disengage the first clutch (20) and/or the second clutch (40);
an engine controller (120) configured to start or stop the engine (10); and
a motor controller (130) connected with the clutch controller (110) and the engine controller (120), configured to:
a) start or stop the first motor (30) and/or the second motor (70); and
b) control the clutch controller (110) and the engine controller (120) according to a running mode of the hybrid power driving system;
wherein the method comprises:
controlling the clutch controller (110) by the motor controller (130) to engage or disengage the first clutch (20) and the second clutch (40) respectively so that the hybrid power driving system is switchable between or among running modes of the hybrid power driving system, wherein
during the disengaging of the second clutch (40), it is detected by the motor controller (130) whether a sum power of the engine (10) and the first motor (30) is less than a preset value P, if YES, the clutch controller (110) is controlled by the motor controller (130) to disengage the second clutch (40), otherwise,
if it is detected by the motor controller (130) that the sum power of the engine (10) and the first motor (30) is greater than or equal to a preset value P, then whether the first motor (30) has a rotational speed less than a second preset value r is detected by the motor controller (130), if YES, the clutch controller (110) is controlled by the motor controller (130) to disengage the second clutch (40); otherwise
the rotational speed of the first motor (30) is reduced by the motor controller (130) until the rotational speed of the first motor (30) is less than the second preset value r; so that the clutch controller (110) is controlled by the motor controller (130) to disengage the second clutch (40).

6. The driving method of claim 5, wherein the motor controller (130) is configured to switch the hybrid power driving system to the second motor driven mode, the dual-motor driven mode, the serial mode or the parallel mode respectively.

7. The driving method of claim 6, wherein the hybrid power driving system is switched to one selected from the second motor driven mode, the dual-motor driven mode, the serial mode and the parallel mode,
wherein switching the hybrid power driving system to the second motor driven mode comprises:
controlling the clutch controller (110) being by the motor controller (130) to disengage the first clutch (20) and the second clutch (40) respectively;
powering the second motor (70) with the energy storage device (100); and
driving the second wheels group (90) by the second motor (70) via the second reducing mechanism (80);
wherein switching the hybrid power driving system to the dual-motor driven mode comprises:
controlling the clutch controller (110) by the motor controller (130) to disengage the first clutch (20) and engage the second clutch (40) respectively;
powering the first motor (30) and the second motor (70) by the energy storage device (100); and
driving the first wheels group (60) and the second wheels group (90) via the first reducing mechanism (50) and the second reducing mechanism (80) respectively;
wherein switching the hybrid power driving system to the serial mode comprises:
controlling the clutch controller (110) by the motor controller (130) to engage the first clutch (20) and disengage the second clutch (40) respectively; and
controlling the engine controller (120) by the motor controller (130) to start the engine (10); and
wherein switching the hybrid power driving system to the parallel mode comprises:
controlling the engine controller (120) by the motor controller (130) to start the engine (10); and
controlling the clutch controller (110) by the motor controller (130) to engage the first clutch (20) and the second clutch (40) respectively.

8. The driving method of claim 5, wherein during the disengaging of the first clutch (20), it is detected by the motor controller (120) whether the power of the engine (10) is less than a preset value P or the rotational speed of the engine (10) is less than a preset value r, if yes, then the clutch controller (110) is controlled by the motor controller (130) to disengage the first clutch (20), otherwise the engine controller (120) is controlled by the motor controller (130) to reduce the rotational speed and/or the power of the engine (10) until the power of the engine (10) is less than the preset value P or the rotational speed of the engine (10) is less than the preset value r so that the clutch controller (110) is controlled by the motor controller (130) to disengage the first clutch (20).

9. The driving method of claim 5, wherein during the engaging of the first clutch (20), it is detected by the motor controller (130) whether a rotational speed difference between the first motor (30) and the engine (10) is less than a first preset value ΔV for at least a first preset time period t1, if YES, then the clutch controller (110) is controlled by the motor controller (130) to engage the first clutch (20), otherwise
the engine controller (120) is controlled by the motor controller (130) to adjust the rotational speed of the engine (10) until the rotational speed difference of the first motor (30) and the engine (10) is less than the first preset value ΔV for at least the first preset time period t1 so that the clutch controller (110) is controlled by the motor controller (130) to engage the first clutch (20).

10. The driving method of claim 5, wherein during the engaging of the second clutch (40), it is detected by the motor controller (130) whether a rotational speed difference between the first motor (30) and a present driving is less than a preset value ΔV for at least a preset time period t1, if YES, the clutch controller (110) is controlled by the motor controller (130) to engage the second clutch (40), otherwise,
if the rotational speed difference between the first motor (30) and the present driving is greater than or equal to a preset value ΔV, or the rotational speed difference is less than the preset value ΔV for less than the preset time period t1, then
if the first clutch (20) is engaged, the motor controller (130) adjusts the rotational speed of the engine (10) and the rotational speed of the first motor (30) until the rotational speed difference between the first motor (30) and the present driving is less than the preset value ΔV for more than the preset time period t1, so that the clutch controller (110) is controlled by the motor controller (130) to engage the second clutch (40),
if the first clutch (20) is disengaged, the motor controller (130) adjusts the rotational speed of the first motor (30) until the rotational speed difference between the first motor (30) and the present driving is less than the preset value ΔV for more than the preset time t1, the clutch controller (110) is controlled by the motor controller (130) to engage the second clutch (40).

11. The driving method of claim 5 or 8, wherein the preset value P is 4KW to 6KW.

12. The driving method of claim 5 or 8, wherein the preset value r is 800 r/min to 1200r/min.

13. The driving method of claim 9 or 10, wherein the preset value ΔV is 100 r/min to 250 r/min.

14. The driving method of claim 9 or 10, wherein the preset time period t1 is 0.4s to 0.6s.

## Patentansprüche

1. Hybrides Antriebssystem, umfassend:
eine Antriebsmaschine (10);
einen ersten Motor (30);
eine erste Kupplung (20), die betriebsmäßig zwischen der Antriebsmaschine (10) und dem ersten Motor (30) angeschlossen ist;
einen ersten Reduzierungsmechanismus (50), der einen ersten Eingangsteil und einen ersten Ausgangsteil hat;
eine zweite Kupplung (40), die betriebsmäßig zwischen dem ersten Motor (30) dem ersten Eingangsteil des ersten Reduzierungsmechanismus (50) angeschlossen ist;
eine erste Radgruppe (60), die betriebsmäßig mit dem ersten Ausgangsteil des ersten Reduzierungsmechanismus (50) verbunden ist;
einen zweiten Motor (70);
eine zweite Radgruppe (90);
einen zweiten Reduzierungsmechanismus (80), der einen zweiten Eingangsteil hat, der betriebsmäßig mit dem zweiten Motor (70) verbunden ist, und einen zweiten Ausgangsteil, der betriebsmäßig mit der zweiten Radgruppe (90) verbunden ist;
eine Energiespeichervorrichtung (100), die mit dem ersten Motor (30) bzw. dem zweiten Motor (70) verbunden ist;
**gekennzeichnet durch**
einen Kupplungscontroller (110), der zum Einkuppeln oder Auskuppeln der ersten Kupplung (20) und/oder der zweiten Kupplung (40) ausgelegt ist;
einen Antriebsmaschinencontroller (120), der zum Starten oder Stoppen der Antriebsmaschine (10) ausgelegt ist; und
einen Motorcontroller (130), der mit dem Kupplungscontroller (110) und dem Antriebsmaschinencontroller (120) verbunden und ausgelegt ist, zum:
a) Starten oder Stoppen des ersten Motors (30) und/oder des zweiten Motors (70); und
b) Steuern des Kupplungscontrollers (110) und des Antriebsmaschinencontrollers (120) entsprechend einem Betriebsmodus des hybriden Antriebssystems, wobei das hybride Antriebssystem für Folgendes ausgelegt ist:
Steuern des Kupplungscontrollers (110) durch den Motorcontroller (130) zum Einkuppeln oder Auskuppeln der ersten Kupplung (20) bzw. der zweiten Kupplung (40), sodass das hybride Antriebssystem zwischen den Betriebsmodi des hybriden Antriebssystems oder innerhalb der Betriebsmodi desselben geschaltet werden kann, wobei
während des Auskuppelns der zweiten Kupplung (40) durch den Motorcontroller (130) festgestellt wird, ob eine Summenleistung der Antriebsmaschine (10) und des ersten Motors (30) kleiner als ein vorgegebener Wert P ist; wenn JA, wird der Kupplungscontroller (110) durch den Motorcontroller (130) gesteuert, um die zweite Kupplung (40) auszukuppeln, andernfalls
wenn vom Motorcontroller (130) festgestellt wird, dass die Summenleistung der Antriebsmaschine (10) und des ersten Motors (30) größer oder gleich einem vorgegebenen Wert P ist, dann wird durch den Motorcontroller (130) festgestellt, ob der erste Motor (30) eine Drehzahl hat, die kleiner als ein zweiter vorgegebener Wert r ist, wenn JA, wird der Kupplungscontroller (110) durch den Motorcontroller (130) so gesteuert, dass die zweite Kupplung (40) ausgekoppelt wird; anderenfalls
wird die Drehzahl des ersten Motors (30) durch den Motorcontroller (130) reduziert, bis die Drehzahl des ersten Motors (30) kleiner als der zweite vorgegebene Wert r ist; sodass der Kupplungscontroller (110) vom Motorcontroller (130) so gesteuert wird, dass die zweite Kupplung (40) ausgekuppelt wird.

2. Hybrides Antriebssystem nach Anspruch 1, das ferner eine externe Ladeschnittstelle umfasst, die mit der Energiespeichervorrichtung (100) verbunden ist und dafür ausgelegt ist, die Energiespeichervorrichtung (100) von einer externen Energiequelle zu laden.

3. Hybrides Antriebssystem nach Anspruch 1, wobei der Betriebsmodus des hybriden Antriebssystems einen zweiten motorbetriebenen Modus umfasst, bei dem
die erste Kupplung (20) und die zweite Kupplung (40) ausgekuppelt sind;
der zweite Motor (70) durch die Energiespeichervorrichtung (100) mit Energie versorgt wird; und
die zweite Radgruppe (90) durch den zweiten Motor (70) über den zweiten Reduzierungsmechanismus (80) angetrieben wird.

4. Hybrides Antriebssystem nach Anspruch 3, wobei der Betriebszustand des hybriden Antriebssystems ferner ein Element umfasst, das aus einem Zweimotorantriebsmodus, einem seriellen Modus und einem parallelen Modus ausgewählt wird, wobei im Zweimotorantriebsmodus:
die erste Kupplung (20) ausgekuppelt ist und die zweite Kupplung (40) eingekuppelt ist;
der erste Motor (30) und der zweite Motor (70) durch die Energiespeichervorrichtung (100) mit Energie versorgt werden;
die erste Radgruppe (60) durch den ersten Motor (30) über den ersten Reduzierungsmechanismus (50) angetrieben wird; und
die zweite Radgruppe (90) durch den zweiten Motor (70) über den zweiten Reduzierungsmechanismus (80) angetrieben wird;
wobei im seriellen Modus:
die erste Kupplung (20) eingekuppelt ist und die zweite Kupplung (40) ausgekuppelt ist;
die Energie der Antriebsmaschine (10) auf den ersten Motor (30) über die erste Kupplung (20) übertragen wird;
der erste Motor (30) die Energie in elektrische Energie transformiert, die in der Energiespeichervorrichtung (100) gespeichert wird;
der zweite Motor (70) von der Energiespeichervorrichtung (100) mit Energie versorgt wird; und
die zweite Radgruppe (90) durch den zweiten Motor (70) über den zweiten Reduzierungsmechanismus (80) angetrieben wird; und
wobei im parallelen Modus:
die erste Kupplung (20) bzw. die zweite Kupplung (40) eingekuppelt sind;
die erste Radgruppe (60) durch die Antriebsmaschine (10) über die erste Kupplung (20), den ersten Motor (30), die zweite Kupplung (40) und den ersten Reduzierungsmechanismus (50) angetrieben wird;
der zweite Motor (70) von der Energiespeichervorrichtung (100) mit Energie versorgt wird; und
die zweite Radgruppe (90) durch den zweiten Motor (70) über den zweiten Reduzierungsmechanismus (80) angetrieben wird.

5. Antriebsverfahren zum Antreiben des hybriden Antriebssystems,
wobei das hybride Antriebssystem umfasst:
eine Antriebsmaschine (10);
einen ersten Motor (30);
eine erste Kupplung (20), die betriebsmäßig zwischen der Antriebsmaschine (10) und dem ersten Motor (30) angeschlossen ist;
einen ersten Reduzierungsmechanismus (50), der einen ersten Eingangsteil und einen ersten Ausgangsteil hat;
eine zweite Kupplung (40), die betriebsmäßig zwischen dem ersten Motor (30) und dem ersten Eingangsteil des ersten Reduzierungsmechanismus (50) angeschlossen ist;
eine erste Radgruppe (60), die betriebsmäßig mit dem ersten Ausgangsteil des ersten Reduzierungsmechanismus (50) verbunden ist;
einen zweiten Motor (70);
eine zweite Radgruppe (90);
einen zweiten Reduzierungsmechanismus (80), der einen zweiten Eingangsteil hat, der betriebsmäßig mit dem zweiten Motor (70) verbunden ist, und einen zweiten Ausgangsteil, der betriebsmäßig mit der zweiten Radgruppe (90) verbunden ist;
eine Energiespeichervorrichtung (100), die mit dem ersten Motor (30) bzw. dem zweiten Motor (70) verbunden ist;
**gekennzeichnet durch**
einen Kupplungscontroller (110), der zum Einkuppeln oder Auskuppeln der ersten Kupplung (20) und/oder der zweiten Kupplung (40) ausgelegt ist;
einen Antriebsmaschinencontroller (120), der zum Starten oder Stoppen der Antriebsmaschine (10) ausgelegt ist; und
einen Motorcontroller (130), der mit dem Kupplungscontroller (110) und dem Antriebsmaschinencontroller (120) verbunden und ausgelegt ist, zum:
a) Starten oder Stoppen des ersten Motors (30) und/oder des zweiten Motors (70); und
b) Steuern des Kupplungscontrollers (110) und des Antriebsmaschinencontrollers (120) gemäß einem Betriebsmodus des hybriden Antriebssystems;
wobei das Verfahren ferner Folgendes umfasst:
Steuern des Kupplungscontrollers (110) durch den Motorcontroller (130) zum Einkuppeln oder Auskuppeln der ersten Kupplung (20) bzw. der zweiten Kupplung (40), sodass das hybride Antriebssystem zwischen den Betriebsmodi des hybriden Antriebssystems oder innerhalb der Betriebsmodi desselben geschaltet werden kann, wobei
während des Auskuppelns der zweiten Kupplung (40) durch den Motorcontroller (130) festgestellt wird, ob eine Summenleistung der Antriebsmaschine (10) und des ersten Motors (30) kleiner als ein vorgegebener Wert P ist; wenn JA, wird der Kupplungscontroller (110) durch den Motorcontroller (130) gesteuert, um die zweite Kupplung (40) auszukuppeln, andernfalls wenn vom Motorcontroller (130) festgestellt wird, dass die Summenleistung der Antriebsmaschine (10) und des ersten Motors (30) größer oder gleich einem vorgegebenen Wert P ist, dann wird durch den Motorcontroller (130) festgestellt, ob der erste Motor (30) eine Drehzahl hat, die kleiner als ein zweiter vorgegebener Wert r ist, wenn JA, wird der Kupplungscontroller (110) durch den Motorcontroller (130) so gesteuert, dass die zweite Kupplung (40) ausgekoppelt wird; anderenfalls
wird die Drehzahl des ersten Motors (30) durch den Motorcontroller (130) reduziert, bis die Drehzahl des ersten Motors (30) kleiner als der zweite vorgegebene Wert r ist; sodass der Kupplungscontroller (110) vom Motorcontroller (130) so gesteuert wird, dass die zweite Kupplung (40) ausgekuppelt wird.

6. Antriebsverfahren nach Anspruch 5, wobei der Motorcontroller (130) zum Schalten des hybriden Antriebssystems in den zweiten motorbetriebenen Modus, den Zweimotorantriebsmodus, den seriellen Modus bzw. den parallelen Modus, ausgelegt ist.

7. Antriebsverfahren nach Anspruch 6, wobei das hybride Antriebssystem in einen Modus geschaltet wird, der aus dem zweiten motorbetriebenen Modus, dem Zweimotorantriebsmodus, dem seriellen Modus und dem parallelen Modus ausgewählt wird,
wobei das Schalten des hybriden Antriebssystems in den zweiten motorbetriebenen Modus umfasst:
Steuern des Kupplungscontrollers (110) durch den Motorcontroller (130), um die erste Kupplung (20) bzw. die zweite Kupplung (40) auszukuppeln;
Versorgen des zweiten Motors (70) mit Energie von der Energiespeichervorrichtung (100); und
Antreiben der zweiten Radgruppe (90) durch den zweiten Motor (70) über den zweiten Reduzierungsmechanismus (80);
wobei das Schalten des hybriden Antriebssystems in den Zweimotorantriebsmodus umfasst:
Steuern des Kupplungscontrollers (110) durch den Motorcontroller (130), um die erste Kupplung (20) auszukuppeln bzw. die zweite Kupplung (40) einzukuppeln;
Versorgen des ersten Motors (30) und des zweiten Motors (70) durch die Energiespeichervorrichtung (100) mit Energie; und
Antreiben der ersten Radgruppe (60) und der zweiten Radgruppe (90) über den ersten Reduzierungsmechanismus (50) bzw. den zweiten Reduzierungsmechanismus (80);
wobei das Schalten des hybriden Antriebssystems in den seriellen Modus umfasst:
Steuern des Kupplungscontrollers (110) durch den Motorcontroller (130), um die erste Kupplung (20) einzukuppeln bzw. die zweite Kupplung (40) auszukuppeln; und
Steuern des Antriebsmaschinencontrollers (120) durch den Motorcontroller (130), um die Antriebsmaschine (10) zu starten; und
wobei das Schalten des hybriden Antriebssystems in den parallelen Modus umfasst:
Steuern des Antriebsmaschinencontrollers (120) durch den Motorcontroller (130), um die Antriebsmaschine (10) zu starten; und
Steuern des Kupplungscontrollers (110) durch den Motorcontroller (130), um die erste Kupplung (20) bzw. die zweite Kupplung (40) einzukuppeln.

8. Antriebsverfahren nach Anspruch 5, wobei während des Auskuppelns der ersten Kupplung (20) vom Motorcontroller (120) festgestellt wird, ob die Leistung der Antriebsmaschine (10) kleiner als ein vorgegebener Wert P oder die Drehzahl der Antriebsmaschine (10) kleiner als ein vorgegebener Wert r ist; wenn ja, dann wird der Kupplungscontroller (110) vom Motorcontroller (130) so gesteuert, dass die erste Kupplung (20) ausgekuppelt wird, anderenfalls wird der Antriebsmaschinencontroller (120) vom Motorcontroller (130) so gesteuert, dass die Drehzahl und/oder die Leistung der Antriebsmaschine (10) reduziert werden, bis die Leistung der Antriebsmaschine (10) kleiner als der vorgegebene Wert P oder die Drehzahl der Antriebsmaschine (10) kleiner als der vorgegebene Wert r ist, sodass der Kupplungscontroller (110) vom Motorcontroller (130) so gesteuert wird, dass die erste Kupplung (20) ausgekuppelt wird.

9. Antriebsverfahren nach Anspruch 5, wobei während des Einkuppelns der ersten Kupplung (20) vom Motorcontroller (130) festgestellt wird, ob eine Drehzahldifferenz zwischen dem ersten Motor (30) und der Antriebsmaschine (10) kleiner als ein erster vorgegebener Wert ΔV für mindestens einen vorgegebenen 2eitabschnitt t1 ist; wenn JA, dann wird der Kupplungscontroller (110) durch den Motorcontroller (130) so gesteuert, dass die erste Kupplung (20) eingekuppelt wird, andernfalls
wird der Antriebsmaschinencontroller (120) vom Motorcontroller (130) so gesteuert, dass die Drehzahl der Antriebsmaschine (10) so eingestellt wird, dass die Drehzahldifferenz des ersten Motors (30) und der Antriebsmaschine (10) kleiner als der erste vorgegebene Wert ΔV zumindest für den ersten vorgegebenen Zeitabschnitt t1 ist, sodass der Kupplungscontroller (110) durch den Motorcontroller (130) so gesteuert wird, dass die erste Kupplung (20) eingekuppelt wird.

10. Antriebsverfahren nach Anspruch 5, wobei während des Einkuppelns der zweiten Kupplung (40) vom Motorcontroller (130) festgestellt wird, ob eine Drehzahldifferenz zwischen dem ersten Motor (30) und einem aktuellen Antrieb kleiner als ein erster vorgegebener Wert ΔV für mindestens einen vorgegebenen 2eitabschnitt t1 ist; wenn JA, dann wird der Kupplungscontroller (110) durch den Motorcontroller (130) so gesteuert, dass die zweite Kupplung (40) eingekuppelt wird, andernfalls,
wenn die Drehzahldifferenz zwischen dem ersten Motor (30) und dem aktuellen Antrieb größer oder gleich einem vorgegebenen Wert ΔV ist oder die Drehzahldifferenz kleiner als der vorgegebene Wert ΔV für weniger als die vorgegebene Zeitperiode t1 ist, dann,
wenn die erste Kupplung (20) eingekuppelt ist, stellt der Motorcontroller (130) die Drehzahl der Antriebsmaschine (10) und die Drehzahl des ersten Motors (30) ein, bis die Drehzahldifferenz zwischen dem ersten Motor (30) und dem aktuellen Antrieb kleiner als der vorgegebene Wert ΔV für mehr als die vorgegebene 2eitperiode t1 ist, sodass der Kupplungscontroller (110) durch den Motorcontroller (130) so gesteuert wird, dass die zweite Kupplung (40) eingekuppelt wird,
wenn die erste Kupplung (20) ausgekuppelt ist, stellt der Motorcontroller (130) die Drehzahl des ersten Motors (30) ein, bis die Drehzahldifferenz zwischen dem ersten Motor (30) und dem aktuellen Antrieb kleiner als der vorgegebene Wert ΔV für mehr als die vorgegebene 2eitperiode t1 ist, sodass der Kupplungscontroller (110) durch den Motorcontroller (130) so gesteuert wird, dass die zweite Kupplung (40) eingekuppelt wird.

11. Antriebsverfahren nach Anspruch 5 oder 8, wobei der vorgegebene Wert P 4 kW bis 6 kW beträgt.

12. Antriebsverfahren nach Anspruch 5 oder 8, wobei der vorgegebene Wert r 800 U/min bis 1200 U/min beträgt.

13. Antriebsverfahren nach Anspruch 9 oder 10, wobei der vorgegebene Wert ΔV 100 U/min bis 250 U/min beträgt.

14. Antriebsverfahren nach Anspruch 9 oder 10, wobei die vorgegebene Zeitperiode t1 0,4 s bis 0,6 s beträgt.

## Revendications

1. Système d'entraînement hybride comprenant :
un moteur (10) ; ;
un premier moteur électrique (30) ;
un premier embrayage (20) couplé de manière opérative entre le moteur (10) et le premier moteur électrique (30) ;
un premier mécanisme réducteur (50) ayant une première partie d'entrée et une première partie de sortie ;
un deuxième embrayage (40) couplé de manière opérative entre le premier moteur électrique (30) et la première partie d'entrée du premier mécanisme réducteur (50) ;
un premier groupe de roues (60) couplé de manière opérative à la première partie de sortie du premier mécanisme réducteur (50) ;
un deuxième moteur électrique (70) ;
un deuxième groupe de roues (90) ;
un deuxième mécanisme réducteur (80) ayant une deuxième partie d'entrée couplée de manière opérative au deuxième moteur électrique (70) et une deuxième partie de sortie couplée de manière opérative au deuxième groupe de roues (90) ;
un dispositif de stockage d'énergie (100) respectivement relié au premier moteur électrique (30) et au deuxième moteur électrique (70) ;
**caractérisé par**
un mécanisme de commande d'embrayage (110) configuré pour embrayer ou débrayer le premier embrayage (20) et/ou le deuxième embrayage (40) ;
un dispositif de commande de moteur (120) configuré pour démarrer ou arrêter le moteur (10) ; et
un dispositif de commande de moteur électrique (130) relié au mécanisme de commande d'embrayage (110) et au dispositif de commande de moteur (120), configuré pour :
a) démarrer ou arrêter le premier moteur électrique (30) et/ou le deuxième moteur électrique (70) ; et
b) commander le mécanisme de commande d'embrayage (110) et le dispositif de commande de moteur (120) en fonction d'un mode de fonctionnement du système d'entraînement hybride, dans lequel le système d'entraînement hybride est adapté pour :
commander le mécanisme de commande d'embrayage (110) grâce au dispositif de commande de moteur électrique (130) pour embrayer ou débrayer respectivement le premier embrayage (20) et le deuxième embrayage (40) de manière à ce que le système d'entraînement hybride puisse être commuté entre des modes de fonctionnement du système d'entraînement hybride ou parmi ceux-ci, dans lequel
pendant le débrayage du deuxième embrayage (40), il est détecté par le dispositif de commande de moteur électrique (130) si une puissance totale du moteur (10) et du premier moteur électrique (30) est inférieure à une valeur préréglée P, si OUI, le mécanisme de commande d'embrayage (110) est commandé par le dispositif de commande de moteur électrique (130) pour débrayer le deuxième embrayage (40), sinon,
s'il est détecté par le dispositif de commande de moteur électrique (130) que la puissance totale du moteur (10) et du premier moteur électrique (30) est supérieure ou égale à une valeur préréglée P, alors il est détecté si le premier moteur électrique (30) a une vitesse de rotation inférieure à une deuxième valeur préréglée r par le dispositif de commande de moteur électrique (130), si OUI, le mécanisme de commande d'embrayage (110) est commandé par le dispositif de commande de moteur électrique (130) pour débrayer le deuxième embrayage (40) ; sinon
la vitesse de rotation du premier moteur (30) est réduite par le dispositif de commande de moteur électrique (130) jusqu'à ce que la vitesse de rotation du premier moteur électrique (30) soit inférieure à la deuxième valeur préréglée r ; de sorte que le mécanisme de commande d'embrayage (110) est commandé par le dispositif de commande de moteur électrique (130) pour débrayer le deuxième embrayage (40).

2. Système d'entraînement hybride selon la revendication 1, comprenant en outre une interface de charge externe couplée au dispositif de stockage d'énergie (100) et configurée pour charger le dispositif de stockage d'énergie (100) à partir d'une source d'énergie externe.

3. Système d'entraînement hybride selon la revendication 1, dans lequel le mode de fonctionnement du système d'entraînement hybride comprend un mode d'entraînement par deuxième moteur électrique où
le premier embrayage (20) et le deuxième embrayage (40) sont débrayés ;
le deuxième moteur électrique (70) est alimenté par le dispositif de stockage d'énergie (100) ; et
le deuxième groupe de roues (90) est entraîné par le deuxième moteur électrique (70) via le deuxième mécanisme réducteur (80).

4. Système d'entraînement hybride selon la revendication 3, dans lequel le mode de fonctionnement du système d'entraînement hybride comprend en outre l'un sélectionné parmi un mode d'entraînement par moteur électrique double, un mode série et un mode parallèle, dans lequel, dans le mode d'entraînement par moteur électrique double :
le premier embrayage (20) est débrayé et le deuxième embrayage (40) est embrayé ;
le premier moteur électrique (30) et le deuxième moteur électrique (70) sont alimentés par le dispositif de stockage d'énergie (100) ;
le premier groupe de roues (60) est entraîné par le premier moteur électrique (30) via le premier mécanisme réducteur (50) ; et
le deuxième groupe de roues (90) est entraîné par le deuxième moteur électrique (70) via le deuxième mécanisme réducteur (80) ;
dans lequel, dans le mode série :
le premier embrayage (20) est embrayé et le deuxième embrayage (40) est débrayé ;
la puissance du moteur (10) est transmise au premier moteur électrique (30) via le premier embrayage (20) ;
le premier moteur électrique (30) transforme la puissance en énergie électrique qui est stockée dans le dispositif de stockage d'énergie (100) ;
le deuxième moteur électrique (70) est alimenté par le dispositif de stockage d'énergie (100) ; et
le deuxième groupe de roues (90) est entraîné par le deuxième moteur électrique (70) via le deuxième mécanisme réducteur (80) ; et
dans lequel, dans le mode parallèle :
le premier embrayage (20) et le deuxième embrayage (40) sont respectivement embrayés ;
le premier groupe de roues (60) est entraîné par le moteur (10) via le premier embrayage (20), le premier moteur électrique (30), le deuxième embrayage (40) et le premier mécanisme réducteur (50) ;
le deuxième moteur électrique (70) est alimenté par le dispositif de stockage d'énergie (100) ; et
le deuxième groupe de roues (90) est entraîné par le deuxième moteur électrique (70) via le deuxième mécanisme réducteur (80).

5. Procédé d'entraînement pour l'entraînement du système d'entraînement hybride,
dans lequel le système d'entraînement hybride comprend :
un moteur (10) ;
un premier moteur électrique (30) ;
un premier embrayage (20) couplé de manière opérative entre le moteur (10) et le premier moteur électrique (30) ;
un premier mécanisme réducteur (50) ayant une première partie d'entrée et une première partie de sortie ;
un deuxième embrayage (40) couplé de manière opérative entre le premier moteur électrique (30) et la première partie d'entrée du premier mécanisme réducteur (50) ;
un premier groupe de roues (60) couplé de manière opérative à la première partie de sortie du premier mécanisme réducteur (50) ;
un deuxième moteur électrique (70) ;
un deuxième groupe de roues (90) ;
un deuxième mécanisme réducteur (80) ayant une deuxième partie d'entrée couplée de manière opérative au deuxième moteur électrique (70), et une deuxième partie de sortie couplée de manière opérative au deuxième groupe de roues (90) ;
un dispositif de stockage d'énergie (100) respectivement relié au premier moteur électrique (30) et au deuxième moteur électrique (70) ;
**caractérisé par**
un mécanisme de commande d'embrayage (110) configuré pour embrayer ou débrayer le premier embrayage (20) et/ou le deuxième embrayage (40) ;
un dispositif de commande de moteur (120) configuré pour démarrer ou arrêter le moteur (10) ; et
un dispositif de commande de moteur électrique (130) relié au mécanisme de commande d'embrayage (110) et au dispositif de commande du moteur (120), configuré pour :
a) démarrer ou arrêter le premier moteur électrique (30) et/ou le deuxième moteur électrique (70) ; et
b) commander le mécanisme de commande d'embrayage (110) et le dispositif de commande du moteur (120) en fonction d'un mode de fonctionnement du système d'entraînement hybride ;
dans lequel le procédé comprend :
la commande du mécanisme de commande d'embrayage (110) par le dispositif de commande de moteur électrique (130) pour respectivement embrayer ou débrayer le premier embrayage (20) et le deuxième embrayage (40) de sorte que le système d'entraînement hybride puisse être commuté entre des modes de fonctionnement du système d'entraînement hybride ou parmi ceux-ci, dans lequel
pendant le débrayage du deuxième embrayage (40), il est détecté par le dispositif de commande de moteur électrique (130) si une puissance totale du moteur (10) et du premier moteur électrique (30) est inférieure à une valeur préréglée P, si OUI, le mécanisme de commande d'embrayage (110) est commandé par le dispositif de commande de moteur électrique (130) pour débrayer le deuxième embrayage (40), sinon,
s'il est détecté par le dispositif de commande de moteur électrique (130) que la puissance totale du moteur (10) et du premier moteur électrique (30) est supérieure ou égale à une valeur préréglée P, alors il est détecté si le premier moteur électrique (30) a une vitesse de rotation inférieure une deuxième valeur préréglée r par le dispositif de commande de moteur électrique (130), si OUI, le mécanisme de commande d'embrayage (110) est commandé par le dispositif de commande de moteur électrique (130) pour débrayer le deuxième embrayage (40) ; sinon
la vitesse de rotation du premier moteur (30) est réduite par le dispositif de commande de moteur électrique (130) jusqu'à ce que la vitesse de rotation du premier moteur électrique (30) soit inférieure à la deuxième valeur préréglée r ; de sorte que le mécanisme de commande d'embrayage (110) est commandé par le dispositif de commande de moteur électrique (130) pour débrayer le deuxième embrayage (40).

6. Procédé d'entraînement selon la revendication 5, dans lequel le dispositif de commande de moteur électrique (130) est configuré pour commuter le système d'entraînement hybride respectivement au mode d'entraînement par deuxième moteur électrique, au mode d'entraînement à moteur électrique double, au mode série ou au mode parallèle.

7. Procédé d'entraînement selon la revendication 6, dans lequel le système d'entraînement hybride est commuté à l'un sélectionné parmi le mode d'entraînement par deuxième moteur électrique, le mode d'entraînement par moteur électrique double, le mode série et le mode parallèle,
dans lequel la commutation du système d'entraînement hybride au mode d'entraînement par deuxième moteur électrique comprend :
la commande du mécanisme de commande d'embrayage (110) faite par le dispositif de commande de moteur électrique (130) pour débrayer respectivement le premier embrayage (20) et le deuxième embrayage (40) ;
l'alimentation du deuxième moteur électrique (70) avec le dispositif de stockage d'énergie (100) ; et
l'entraînement du deuxième groupe de roues (90) par le deuxième moteur électrique (70) via le deuxième mécanisme réducteur (80) ;
dans lequel la commutation du système d'entraînement hybride au mode d'entraînement par moteur électrique double comprend :
la commande du mécanisme de commande d'embrayage (110) par le dispositif de commande de moteur électrique (130) pour respectivement débrayer le premier embrayage (20) et embrayer le deuxième embrayage (40) ;
l'alimentation du premier moteur électrique (30) et du deuxième moteur électrique (70) grâce au dispositif de stockage d'énergie (100) ; et
l'entraînement du premier groupe de roues (60) et du deuxième groupe de roues (90) respectivement via le premier mécanisme réducteur (50) et le deuxième mécanisme réducteur (80) ;
dans lequel la commutation du système d'entraînement hybride au mode série comprend :
la commande du mécanisme de commande d'embrayage (110) par le dispositif de commande du moteur électrique (130) pour respectivement embrayer le premier embrayage (20) et débrayer le deuxième embrayage (40) ; et
la commande du dispositif de commande de moteur (120) par le dispositif de commande de moteur électrique (130) pour démarrer le moteur (10) ; et
dans lequel la commutation du système d'entraînement hybride au mode parallèle comprend :
la commande du dispositif de commande de moteur (120) par le dispositif de commande de moteur électrique (130) pour démarrer le moteur (10) ; et
la commande du mécanisme de commande d'embrayage (110) par le dispositif de commande de moteur électrique (130) pour respectivement embrayer le premier embrayage (20) et le deuxième embrayage (40).

8. Procédé d'entraînement selon la revendication 5, dans lequel, pendant le débrayage du premier embrayage (20), il est détecté par le dispositif de commande du moteur électrique (120) si la puissance du moteur (10) est inférieure à une valeur préréglée P ou si la vitesse de rotation du moteur (10) est inférieure à une valeur préréglée r, si oui, alors le mécanisme de commande d'embrayage (110) est commandé par le dispositif de commande de moteur électrique (130) pour débrayer le premier embrayage (20), sinon, le dispositif de commande de moteur (120) est commandé par le dispositif de commande de moteur électrique (130) pour réduire la vitesse de rotation et/ou la puissance du moteur (10) jusqu'à ce que la puissance du moteur (10) soit inférieure à la valeur préréglée P ou que la vitesse de rotation du moteur (10) soit inférieure à la valeur préréglée r de sorte que le mécanisme de commande d'embrayage (110) est commandé par le dispositif de commande de moteur électrique (130) pour débrayer le premier embrayage (20).

9. Procédé d'entraînement selon la revendication 5, dans lequel, pendant l'embrayage du premier embrayage (20), il est détecté par le dispositif de commande de moteur électrique (130) si une différence de vitesse de rotation entre le premier moteur électrique (30) et le moteur (10) est inférieure à une première valeur préréglée ΔV pour au moins une première période de temps préréglée t1, si OUI, alors le mécanisme de commande d'embrayage (110) est commandé par le dispositif de commande de moteur électrique (130) pour embrayer le premier embrayage (20), sinon
le dispositif de commande de moteur (120) est commandé par le dispositif de commande de moteur électrique (130) pour ajuster la vitesse de rotation du moteur (10) jusqu'à ce que la différence de vitesse de rotation du premier moteur électrique (30) et du moteur (10) soit inférieure à la première valeur préréglée ΔV pour au moins la première période de temps préréglée t1 de sorte que le mécanisme de commande d'embrayage (110) est commandé par le dispositif de commande de moteur électrique (130) pour embrayer le premier embrayage (20).

10. Procédé d'entraînement selon la revendication 5, dans lequel, pendant l'embrayage du deuxième embrayage (40), il est détecté par le dispositif de commande du moteur électrique (130) si une différence de vitesse de rotation entre le premier moteur électrique (30) et un entraînement présent est inférieure à une valeur préréglée ΔV pendant au moins une période de temps préréglée t1, si OUI, le mécanisme de commande d'embrayage (110) est commandé par le dispositif de commande de moteur électrique (130) pour embrayer le deuxième embrayage (40), sinon
si la différence de vitesse de rotation entre le premier moteur électrique (30) et l'entraînement présent est supérieure ou égale à une valeur préréglée ΔV, ou si la différence de vitesse de rotation est inférieure à la valeur préréglée ΔV pendant moins de la période de temps préréglée t1, alors
si le premier embrayage (20) est embrayé, le dispositif de commande de moteur électrique (130) ajuste la vitesse de rotation du moteur (10) et la vitesse de rotation du premier moteur électrique (30) jusqu'à ce que la différence de vitesse de rotation entre le premier moteur électrique (30) et l'entraînement présent soit inférieure à la valeur préréglée ΔV pour plus de la période de temps préréglée t1, de sorte que le mécanisme de commande d'embrayage (110) est commandé par le dispositif de commande de moteur électrique (130) pour embrayer le deuxième embrayage (40),
si le premier embrayage (20) est débrayé, le dispositif de commande de moteur électrique (130) ajuste la vitesse de rotation du premier moteur électrique (30) jusqu'à ce que la différence de vitesse de rotation entre le premier moteur électrique (30) et l'entraînement présent soit inférieur à la valeur préréglée ΔV pour plus du temps préréglé t1, le mécanisme de commande d'embrayage (110) est commandé par le dispositif de commande de moteur électrique (130) pour embrayer le deuxième embrayage (40).

11. Procédé d'entraînement selon la revendication 5 ou 8, dans lequel la valeur préréglée P est de 4KW à 6 KW.

12. Procédé d'entraînement selon la revendication 5 ou 8, dans lequel la valeur préréglée r est de 800 r/min à 1200 r/min.

13. Procédé de commande selon la revendication 9 ou 10, dans lequel la valeur préréglée ΔV est de 100 r/min à 250 r/min.

14. Procédé d'entraînement selon la revendication 9 ou 10, dans lequel la période de temps préréglée t1 est de 0,4 s à 0,6s.
